# DEMANDE DE BREVET EUROPEEN

(11) **EP 1 075 784 A1**
(43) Date de publication de la demande: **14.02.2001**
(21) Numéro de dépôt: 00402245.5
(22) Date de dépôt: 08.08.2000
(51) Int. Cl.: A01B 27/00, B02C 13/31

(54) **Broyeurs de pierres mobile**

(30) Priorité: 10.08.1999 FR 9910357
(71) Demandeur: ETABLISSEMENTS BUGNOT, F-52270 Doulaincourt Saucourt (FR)
(72) Inventeur: Bugnot, Michel, 52270 Doulaincourt Saucourt (FR)
(74) Mandataire: Robert, Jean-Pierre

(57) **Abrégé**

Broyeur de pierres mobile avec un bâti (1) comprenant deux flancs (2, 3) entretoisés formant un support pour un rotor inférieur (12) de broyage perpendiculaire aux flancs, pour des semelles (39, 41) de glissement situées en partie inférieure du bâti et pour des moyens d'entraînement (10, 11, 35, 34, 30) en rotation du rotor (12) dont une partie terminale (30) s'étend à l'extérieur d'au moins l'un des flancs (3) du bâti (1), le rotor (12) étant calé sur un arbre d'entraînement (20) traversant le flanc (2) correspondant et pourvu d'une roue dentée (22) d'entraînement située à l'extérieur du flanc (2) traversé, les moyens d'entraînement comprenant un boîtier (30) de transmission avec une roue d'entrée (33) et une roue de sortie (22) formée par la roue dentée de l'arbre d'entraînement, le boîtier (30) s'étendant dans un plan extérieur et parallèle au flanc (2) traversé susdit et le boîtier de transmission (30) étant monté pivotant autour de l'axe (16) de l'arbre d'entraînement à l'encontre de l'effet d'un mécanisme (36) de rappel attelé entre le boîtier (30) et le bâti (1) et tendant à maintenir le boîtier (30) dans une position déterminée en exerçant sur celui-ci un couple autour de son axe (16) de pivotement.

## Description

La présente invention concerne les broyeurs de pierres mobile du type de ceux déplacés par un tracteur agricole sur le terrain.

Il existe actuellement sur le marché des broyeurs de pierres comprenant un bâti qui porte en partie basse un cylindre équipé de marteaux en saillie de sa surface et qui est animé en rotation dans le sens contraire du sens de rotation des roues du tracteur. Les marteaux viennent frôler au moins une enclume solidaire du châssis et située en partie haute à l'avant de l'appareil. Ces appareils étaient primitivement conçus pour broyer des pierres qui étaient plus ou moins regroupées sous forme d'andains sur le trajet du broyeur.

On constate aujourd'hui que le domaine d'emploi de ce genre d'appareils s'est élargi. A l'origine, utilisés essentiellement dans le domaine agricole après l'épierrage des champs, on les rencontre de plus en plus comme outils de préparation ou de réfection des chemins ou des routes.

Dans cette utilisation, le broyeur agit également comme un défonceur du sol à traiter et pour ce faire, le rotor cylindrique porteur des marteaux doit pouvoir être descendu sous le niveau de roulement ou de glissement de l'appareil sur le sol. Pour pouvoir bénéficier d'une profondeur de pénétration importante (une à deux dizaines de centimètres par exemple) la tendance est à l'augmentation du diamètre du rotor pour des raisons techniques tenant à la conception même des moyens d'entraînement en rotation de ce rotor. En effet le rotor est porté par la partie inférieure des parois latérales du bâti au moyen de deux paliers et se prolonge à l'extérieur d'au moins l'un des deux par un arbre d'entraînement auquel est accouplée une poulie pour l'enroulement de plusieurs courroies motrices. Les paliers et la poulie se doivent d'être protégés par un carter en forme de patin de glissement qui s'étend nécessairement en dessous de l'axe du rotor à une distance non négligeable de ce dernier. Cette dimension constitue la partie du rayon du rotor qui ne peut pas pénétrer dans le sol. Cette contrainte technologique conduit à concevoir des rotors de grand diamètre pour pouvoir bénéficier d'une profondeur de pénétration dans le sol acceptable. Outre que ces rotors sont lourds, à couple de transmission égal, la force d'impact des marteaux contre le sol et les pierres est inversement proportionnelle à leur rayon de giration. Aussi, un broyeur à rotor de diamètre important impose-t-il une motorisation surdimensionnée ce qui en grève le coût. Par ailleurs la largeur hors tout du broyeur est importante comparée à la largeur utile de travail, compte tenu de l'encombrement en largeur de la poulie ; cet encombrement est d'autant plus important qu'il faut un nombre important de courroies pour transmettre le couple nécessaire au rotor afin qu'il conserve une performance de travail acceptable. En outre l'encombrement axial de la poulie demande également de prévoir de larges semelles du broyeur sur le sol pour former des boucliers de protection suffisants pour les poulies. Cette largeur importante des semelles est pénalisante dans certaines conditions d'utilisation du broyeur.

Par la présente invention on entend s'affranchir des contraintes technologiques des broyeurs existants qui constituent une limite à leur emploi en prévoyant une structure peu encombrante des moyens de support et d'entraînement du rotor.

A cet effet l'invention a donc pour objet un broyeur de pierres mobile avec un bâti comprenant deux flancs entretoisés formant un support pour un rotor inférieur de broyage perpendiculaire aux flancs, pour des semelles de glissement de l'appareil au sol et pour des moyens d'entraînement en rotation du rotor dont une partie terminale s'étend à l'extérieur d'au moins l'un des flancs du bâti.

Selon l'invention, le rotor est calé sur un arbre d'entraînement traversant le flanc correspondant et pourvu d'une roue dentée d'entraînement située à l'extérieur du flanc traversé, tandis que les moyens d'entraînement comprennent un boîtier de transmission avec une roue dentée d'entrée et une roue de sortie formée par la roue dentée de l'arbre d'entraînement, le boîtier s'étendant dans un plan extérieur et parallèle au flanc traversé susdit et que le boîtier de transmission est monté pivotant autour de l'axe de l'arbre d'entraînement et à l'encontre de l'effet d'un mécanisme de rappel attelé entre le boîtier et le bâti tendant à maintenir le boîtier dans une position déterminée en exerçant sur celui-ci un couple autour de son axe de pivotement.

Ces moyens permettent de diminuer l'encombrement axial et radial des moyens d'entraînement, ce qui permet, toutes choses égales par ailleurs, de disposer d'un rotor de diamètre relativement faible tout en préservant une bonne capacité de ce dernier à pénétrer dans le sol.

La roue dentée solidaire de l'arbre d'entraînement peut être un pignon ou une roue destinée à accueillir une chaîne. On sait qu'une telle disposition permet de transmettre un couple beaucoup plus important qu'avec une courroie, à diamètre égal.

Pour pallier la perte de l'avantage d'une transmission à courroie simple ou multiple qui tient à la capacité de la courroie de patiner sur la poulie d'entraînement du rotor lorsque ce dernier rencontre un couple résistant trop important, le pivotement du boîtier qui intervient lorsque l'effort résistant rencontré par le rotor est supérieur au couple normal de retenue du boîtier, permet d'absorber cet à-coup résistant. Une détection de ce pivotement peut également constituer le moyen d'une commande de débrayage ou de tout dispositif de sécurité pour sauvegarder les moyens de transmission. C'est ainsi qu'un capteur d'un seuil de pivotement du boîtier peut être prévu entre ce dernier et le bâti pour émettre en sortie un signal de sécurité susceptible d'être exploité comme commande de l'arrêt de la transmission du couple de rotation du rotor par coupure du moteur ou découplage de deux éléments de la ligne de transmission en amont du rotor.

Dans une variante de réalisation destinée aux broyeurs de forte puissance, les moyens d'entraînement du rotor comprennent deux parties terminales qui s'étendent chacune à l'extérieur du flanc correspondant du bâti du broyeur pour attaquer le rotor à chaque extrémité. Dans ce cas, selon l'invention le rotor comporte un second arbre d'entraînement coaxial au premier et traversant le flanc correspondant et pourvu également d'une roue dentée d'entraînement située à l'extérieur du flanc traversé. La partie terminale correspondante des moyens d'entraînement comprend également un boîtier de transmission avec une roue d'entrée et une roue de sortie formée par la roue dentée du second arbre d'entraînement, ce boîtier d'entraînement étant lui aussi monté pivotant autour de l'axe commun aux arbres d'entraînement donc à celui du rotor. Ce boîtier n'est associé à aucun mécanisme de rappel et sa possibilité de pivotement autour de l'axe du rotor permet de prendre en compte la dispersion des cotes (des calages angulaires des roues de transmission) qui nécessairement existent entre les deux branches de transmission des moyens d'entraînement. Cette caractéristique permet de s'affranchir de la nécessité de placer un dispositif différentiel entre les deux branches de transmission qui, par hypothèse, sont issues d'une source de mouvement unique, par exemple la prise de force d'un véhicule tracteur accouplée à un boîtier de renvoi diviseur du mouvement de rotation en deux branches.

D'autres caractéristiques et avantages de l'invention ressortiront de la description donnée ci-après à titre d'exemple d'un mode de sa réalisation.

Il sera fait référence aux dessins annexés parmi lesquels :
- la figure 1 est une vue générale en perspective d'un broyeur selon l'invention,
- la figure 2 est une vue de côté de ce broyeur,
- la figure 3 est une vue en coupe du montage du rotor dans le bâti du broyeur.

Le broyeur de l'invention comporte un bâti 1 comprenant essentiellement deux flancs latéraux 2 et 3 entretoisés par des traverses telles que celles 4 représentées à l'avant du broyeur. Ce bâti constitue le support de divers organes fonctionnels du broyeur. C'est ainsi que la traverse 4 et une potence 5 qui lui est associée en partie supérieure porte les trois points 6, 7 et 8 d'attelage du broyeur à un tracteur destiné à le déplacer dans le sens D. Une prise de force 9 fait saillie à l'avant de la potence 5 pour pénétrer dans un boîtier de renvoi 10 situé à l'arrière de la potence duquel sort un arbre d'entraînement 11 s'étendant en direction, dans le cas des figures, du flanc 3.

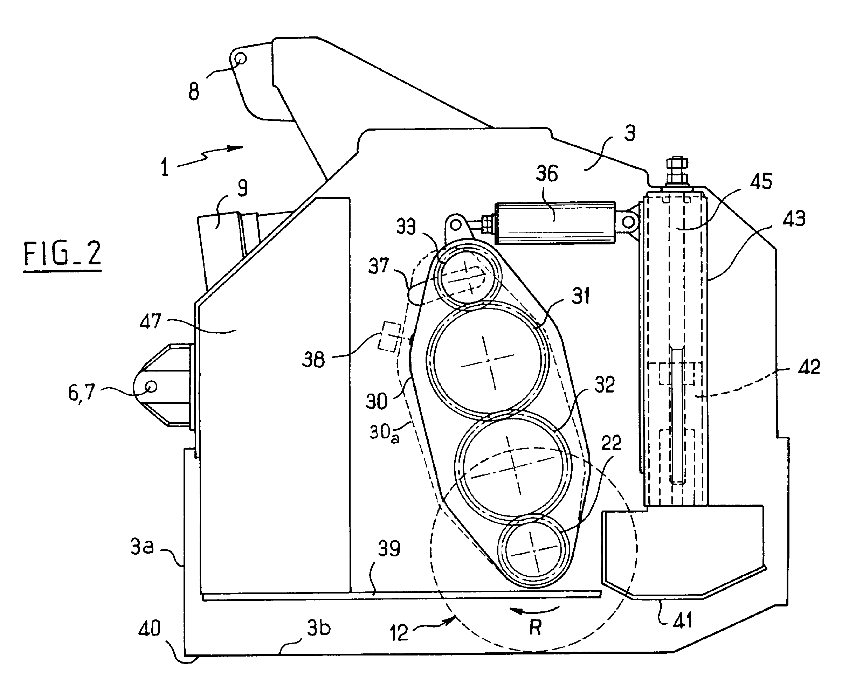

Entre les flancs 2 et 3 et à la partie inférieure du bâti, s'étend un rotor de broyage 12 représenté à la figure 2 par un cercle symbolisant l'enveloppe du volume balayé par les marteaux que comporte de manière connue en lui-même ce rotor 12. De même, et de manière connue, une enclume 13 qui peut être réglable, s'étend entre les flancs 2 et 3 du bâti à peu de distance du rotor 12 équipé de ses marteaux. Dans certaines applications (débroussaillage par exemple) la présence de cette enclume n'est pas indispensable. Le sens de rotation du rotor est indiqué par la flèche R si bien que les marteaux forcent les pierres ou autre matériau avec lesquels ils sont en contact contre l'enclume 13, ce qui les brisent jusqu'à un calibre tel que les produits puissent passer entre le rotor et l'enclume.

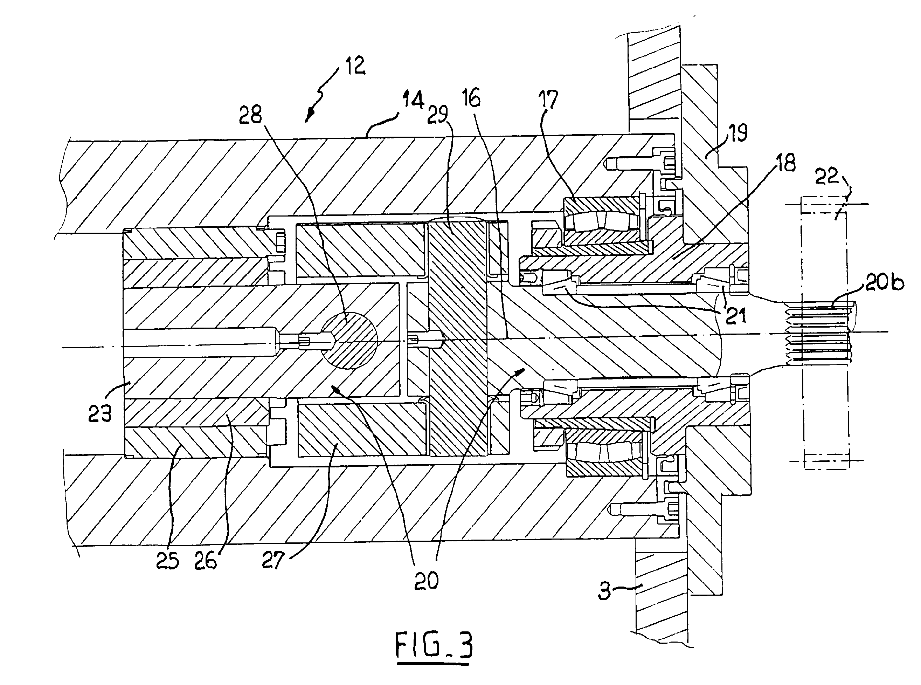

A la figure 3 on a illustré partiellement le rotor 12 et notamment son moyeu central 14 dépourvu des marteaux dont il est normalement équipé. Ce moyeu 14 est pourvu à chacune de ses extrémités (une seule est représentée à la figure) d'un logement cylindrique 15, d'axe 16 confondu avec l'axe du moyeu 14 destiné à accueillir un palier à rouleaux 17. La bague de roulement interne de ces paliers est solidaire d'une fusée 18 rapportée sur le flanc 3 correspondant du bâti. On comprend que par ce montage les paliers de support du rotor ne font saillie à l'extérieur des flancs 2 et 3 que par la bride de montage 19 des fusées 18.

Le moyeu 14 du rotor est, au moins d'un côté, pourvu d'un arbre d'entraînement 20, traversant la fusée 18 qui le centre sur l'axe 16 au moyen de roulements de support 21 pour saillir au-delà de la bride 19 par une extrémité cannelée 20b.

Sur cette extrémité cannelée est calée une roue dentée 22.

Pour prendre en compte l'excentricité entre l'axe du roulement 17 et l'axe des roulements 21 résultant nécessairement des tolérances de fabrication et de montage de l'appareil, l'arbre d'entraînement 20 est en réalité en deux parties successives 23 et 24, la partie 23 étant frettée ou montée dans le rotor au moyen de bagues coniques 25, 26 et son extrémité libre étant attelée à l'extrémité intérieure de la partie 24 par un joint de Oldham. Ce joint est ici formé par un manchon 27 qui reçoit à coulissement deux goupilles diamétrales 28 et 29 orthogonales l'une de l'autre, l'une 28 étant solidaire de la partie 23 et l'autre 29 de la partie 24.

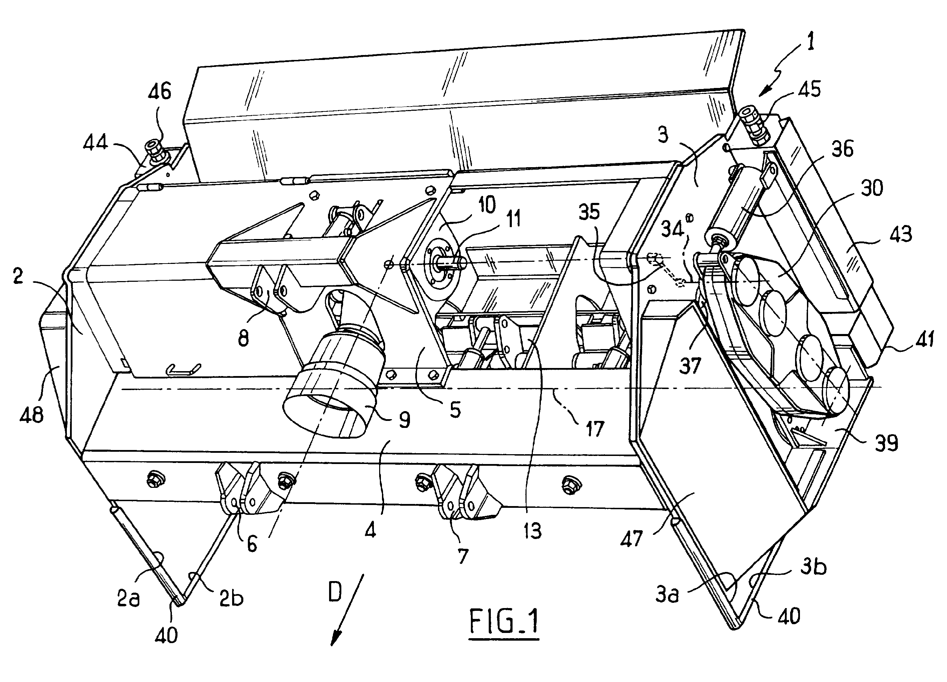

La roue dentée 22 est la roue de sortie d'un boîtier de transmission 30 qui comporte un jeu de pignons 31, 32 et un pignon d'entrée 33. Le pignon 33 est accouplé en rotation à un arbre symbolisé par l'axe 34 de la figure 1 lui-même relié à l'arbre 11 de sortie de la boîte de renvoi 10 par un système à cardan 35 représenté de façon symbolique. Le système à cardan 35 est logé dans un carter situé le long de la face intérieure du flanc 3 du bâti 1. Le système à cardan 35 permet un déplacement de l'arbre 34 parallèlement à lui-même.

La boîte de transmission 30 est montée pivotante autour de l'axe 16 de la roue 22. Elle est par ailleurs immobilisée en position angulaire autour de cet axe 16 par un système de rappel 36 élastique qui la maintient dans la position représentée aux figures 1 et 2 sous un effort déterminé engendrant ainsi autour de l'axe 16 un couple de maintien du boîtier 30 également déterminé. Le système de rappel 36 peut être constitué par un dispositif à ressort associé à un amortisseur hydraulique, un dispositif oléopneumatique, de préférence réglable, ou un simple bloc de caoutchouc.

On comprend que si le rotor 12 rencontre un effort résistant qui tend à l'immobiliser, le boîtier 30 tend à pivoter autour de l'axe 16 dans le sens contraire des aiguilles d'une montre, ce qui est possible grâce à la lumière 37 ménagée dans le flanc 3 pour le passage de l'axe 34. Ce pivotement sera réalisé si l'effort de rappel normal du système de rappel 36 est vaincu et permet donc d'encaisser un à coup sur le rotor. Le pivotement du boîtier 30 pourra être détecté par un détecteur ou capteur 38 destiné à émettre en sortie un signal qui peut être exploité pour par exemple désaccoupler, au moyen d'un dispositif à embrayage prévu à cet effet, l'arbre de sortie 11 de la prise de force 9 en amont de celui-ci. Le capteur 38 peut également être logé à l'intérieur de l'organe de rappel 36 faisant ainsi un tout avec celui-ci qu'il est possible de régler préalablement au montage final du broyeur.

On voit clairement de la figure 2 que l'encombrement radial autour de l'axe 16 des moyens d'entraînement en rotation du rotor 12 est réduit, ce qui permet de placer une plaque de protection 39 inférieure au plus près de cet axe 16. On remarque alors que le rotor 12 fait largement saillie en dessous de cette plaque, ce qui lui permet de pénétrer correctement dans le sol. Les flancs 2 et 3 quant à eux s'étendent jusqu'au-delà de la partie inférieure du rotor 12 afin de constituer une protection latérale contre les projections pouvant survenir lorsque le broyeur est en fonctionnement. Ces flancs cependant ne constituent pas une gêne à la pénétration du broyeur dans le sol car ils agissent comme une lame qui s'enfonce dans ce dernier sous le propre poids du broyeur. A ce propos on aura noté que les bords chants 2a, 3a et inférieurs 2b, 3b de ces flancs sont revêtus d'une garniture d'usure 40 formée sensiblement en lame de couteau.

Enfin, le réglage de la profondeur de pénétration du rotor dans le sol peut être assuré par une paire de semelles telles que celles 41 représentées aux figures 1 et 2 solidaires chacune d'un montant ou pied vertical 42 dont la position est réglable dans un fourreau 43, 44 porté par la surface extérieure de chacun des flancs 2 et 3. Le réglage en hauteur des semelles 41 peut être assuré par exemple comme représenté à la figure 2, par un système vis - écrou, les fourreaux 43 et 44 portant une vis 45, 46 qui peut tourner à l'intérieur de ceux-ci tandis que le montant 42 correspondant est conformé en un écrou tout en étant immobilisé en rotation, les fourreaux 43 étant par exemple de section carrée. Ce réglage peut être motorisé par tout moyen connu et la manoeuvre en rotation des deux vis 45, 46 peut être synchronisée.

On notera enfin la présence à l'avant des flancs 2 et 3 de déflecteurs 47, 48 qui forment des éléments pour chasser les pierres sur les côtés du broyeur et protéger ainsi notamment le boîtier de transmission 30.

Dans l'exemple représenté la motorisation du rotor 12 est réalisée d'un seul côté du broyeur. On peut bien entendu sans sortir du cadre de l'invention augmenter cette motorisation en disposant les mêmes moyens d'entraînement que ceux décrits le long de la face extérieure du flanc 2 avec une seconde sortie du boîtier de renvoi 10.

A la figure 2 on a représenté en 30a un boîtier identique au boîtier 30 qui contient un même jeu de pignons s'étendant entre une roue, telle celle 22 calée sur un arbre d'entraînement du rotor que ce dernier comporte à son autre extrémité comme celui 20 de la figure 3 et une roue dentée telle que 33 accouplée au second arbre de transmission de sortie de la boîte de renvoi 9. Le flanc 2 possède également une lumière telle que celle 37 du flanc 3.

En revanche le boîtier 30a ne coopère avec aucun système de rappel tel que celui 36. Sa fonction, du fait de sa capacité à pivoter, réside dans la prise en compte des décalages angulaires existant nécessairement entre les éléments homologues des deux branches de transmission du fait des tolérances de montage et de fabrication. Cette disposition permet de s'affranchir d'un dispositif de transmission à différentiel entre les deux branches.

## Revendications

1. Broyeur de pierres mobile avec un bâti (1) comprenant deux flancs (2, 3) entretoisés formant un support pour un rotor inférieur (12) de broyage perpendiculaire aux flancs, pour des semelles (39, 41) de glissement situées en partie inférieure du bâti et pour des moyens d'entraînement (10, 11, 35, 34, 30) en rotation du rotor (12) dont une partie terminale (30) s'étend à l'extérieur d'au moins l'un des flancs (3) du bâti (1), caractérisé en ce que le rotor (12) est calé sur un arbre d'entraînement (20) traversant le flanc (2) correspondant et pourvu d'une roue dentée (22) d'entraînement située à l'extérieur du flanc (2) traversé, en ce que les moyens d'entraînement comprennent un boîtier (30) de transmission avec une roue d'entrée (33) et une roue de sortie (22) formée par la roue dentée de l'arbre d'entraînement, le boîtier (30) s'étendant dans un plan extérieur et parallèle au flanc (2) traversé susdit et en ce que le boîtier de transmission (30) est monté pivotant autour de l'axe (16) de l'arbre d'entraînement à l'encontre de l'effet d'un mécanisme (36) de rappel attelé entre le boîtier (30) et le bâti (1) et tendant à maintenir le boîtier (30) dans une position déterminée en exerçant sur celui-ci un couple autour de son axe (16) de pivotement.

2. Broyeur selon la revendication 1, caractérisé en ce qu'un capteur (38) de pivotement du boîtier (30) est prévu entre ce dernier et le bâti (1) pour émettre en sortie un signal de sécurité susceptible d'être exploité pour commander l'arrêt de la transmission du couple de rotation du rotor.

3. Broyeur selon la revendication 2, caractérisé en ce que les moyens de transmission comprennent un mécanisme de débrayage commandé directement ou indirectement par ledit capteur (38).

4. Broyeur selon l'une quelconque des revendications précédentes, caractérisé en ce que le rotor comporte un second arbre d'entraînement avec une roue dentée à l'extérieur du flanc (3) correspondant tandis que les moyens d'entraînement comportent un second boîtier (30a) monté à pivotement autour de l'axe de cette roue dentée du second arbre d'entraînement.

5. Broyeur selon l'une quelconque des revendications précédentes, caractérisé en ce que les flancs (2, 3) sont équipés de paliers (17) de soutien du rotor entièrement logés du côté de leur face intérieure et à l'intérieur du rotor (12).

6. Broyeur selon la revendication 5, caractérisé en ce que le palier (17) du côté d'entraînement du rotor (12) est porté par l'extérieur d'une fusée (18) dont l'intérieur forme palier pour l'arbre d'entraînement (20), lequel est en deux parties axiales (23, 24) accouplées par un joint de Oldham (27, 28, 29).

7. Broyeur selon l'une des revendications précédentes, caractérisé en ce que les flancs (2 et 3) sont équipés sur leur chant inférieur (2a, 2b, 3a, 3b) d'une garniture d'usure (40).

8. Broyeur selon l'une des revendications précédentes, caractérisé en ce que la surface extérieure d'au moins le flanc traversé (2) est équipée d'un déflecteur (47) en avant du boîtier de transmission (30).

9. Broyeur selon l'une des revendications précédentes, caractérisé en ce que les semelles de glissement (41) sont solidaires de l'extrémité inférieure d'un pied (42) vertical monté réglable en position le long de la surface extérieure de chaque flanc.
